# EUROPEAN PATENT SPECIFICATION

(11) **EP 3 546 770 B1**
(45) Date of publication and mention of the grant of the patent: **20.01.2021**
(21) Application number: 18163883.4
(22) Date of filing: 26.03.2018
(51) Int. Cl.: F16B 21/18, F16B 2/24

(54) **ELECTRIC SKIN TREATMENT DEVICE AND COUPLING UNIT FOR A SKIN TREATMENT DEVICE**
ELEKTRISCHE HAUTBEHANDLUNGSVORRICHTUNG UND KUPPLUNGSEINHEIT FÜR EINE HAUTBEHANDLUNGSVORRICHTUNG
DISPOSITIF ÉLECTRIQUE DE TRAITEMENT DE LA PEAU ET UNITÉ D'ACCOUPLEMENT POUR UN DISPOSITIF DE TRAITEMENT DE LA PEAU

(43) Date of publication of application: 02.10.2019
(73) Proprietor: Braun GmbH, 61476 Kronberg im Taunus (DE)
(72) Inventor: Stimpel, Johannes, 61476 Kronberg (DE)
(74) Representative: P&G Patent Germany

(56) References cited:
- EP-A1- 2 554 439
- WO-A1-2017/079199
- WO-A1-2017/207437
- US-A- 5 518 332

## Description

### FIELD OF THE INVENTION

The present invention relates to a coupling unit for connecting a detachable cartridge containing at least one skin treatment unit to a handle component of an electric skin treatment device. The present invention also relates to an electric skin treatment device comprising a handle component with a motor, the coupling unit and a detachable cartridge which is releasably coupled to the handle component by means of the coupling unit.

### BACKGROUND OF THE INVENTION

Skin treatment devices are used to fulfill various requirements of skin and include hair cutting appliances, skin cleansing appliances, skin anti-aging treatment devices, skin massage devices, etc. Detachable cartridges have been developed for skin treatment devices for easy replacement of the skin treatment unit, and in the case of hair cutting appliances, for easy cleaning and replacement of the blades when the blades are dirty, damaged or worn. Detachable cartridges are attached to the housing of the device through retention means and various solutions have been provided to enable swift and simple attachment and detachment as well as accurate mounting of the cartridges at the housing (or main body) of the skin treatment device.

WO 2017/207437 A1 discloses an attachment for a personal care device.

WO 2015/074853 A1 discloses a receiving receptacle for a connector plug for connecting detachable cutting unit with the rest of a hair cutting appliance. The receiving receptacle comprises at least one receiving socket comprising a receiving recess that is adapted to receive a respective engagement element of a connector plug, at least one biasing unit arranged in the at least one receiving socket underneath the receiving recess, wherein the at least one biasing unit comprises a first biasing element and a second biasing element which are laterally spaced with respect to each other and are being arranged to receive the engagement element of the connector plug in a biasing manner. The first biasing element comprises a retaining contact portion that is configured to define the receiving position of the engagement element in an insertion direction (Z), and the second biasing element comprises an alignment contact portion that is conFigured to define the receiving position of the engagement element in a longitudinal direction (X) and in a lateral direction (Y).

The Chinese utility model, CN 203390959 U, discloses a floating electric shaver, which is provided with two or more tool bits. The floating electric shaver comprises a tool bit assembly and a handle assembly, and is characterized in that the tool bit assembly comprises a tool bit floating assembly and a driving assembly. The tool bit floating assembly is movably connected with the driving assembly. The handle assembly is used for providing a power supply for driving the tool bit assembly to shave rotationally. The tool bit assembly and the handle assembly are connected with a clamping groove of a universal shaft of the tool bit assembly through a snap spring of the handle assembly.

Furthermore, an interface between a detachable cartridge and the handle component of an electric skin treatment device is known wherein catches loaded with spiral springs have been developed at the interface to interact with the lower frame of the detachable cartridge

However, these known technical developments show several drawbacks. For example, they use a large number of parts to achieve the same technical function, e. g. attachment/de-attachment and mounting of the cartridge to the main body of the device, which leads to increased production costs due to parts prices, assembly costs and control as well as logistical complexity. In addition, they require more installation space, which leads to a more bulky design of the head of the device, and as a result, the appearance of the device is regarded as less modern and less dynamic and is consequently less popular among the customers. Moreover, these developments are less flexible in terms of variability of the retention force since they tend to be more limited in the interacting parts geometry.

### SUMMARY OF THE INVENTION

It is an object of the present invention to provide an interface between the handle component of a skin treatment device and a removable cartridge, wherein the interface does not require much installation space, is easy to assembly and provides a retention force for the cartridge that does not exceed typical operation forces applied by the consumer when the consumer is trying to remove the cartridge, but at the same time ensures a proper interconnection of the cartridge to the rest part of the shaver.

It is another object of the present invention to provide a skin treatment device with a detachable cartridge which comprises the above mentioned interface, so that the removable cartridge is easy to be attached and de-attached and the design of the head of the skin treatment device can be light.

The interface comprises a coupling unit for connecting a detachable cartridge containing at least one skin treatment unit to a handle component of an electric skin treatment device. In more detail, the handle may be movably connected to a head which in turn may be connected with the detachable cartridge containing at least one skin treatment unit. The coupling unit comprises a frame adapted to receive a respective engagement element of the cartridge. For example, the frame may comprise at least two opposing notches that are each adapted to receive a respective engagement element of the cartridge. The frame is provided with a U-shaped spring having two arms extending at least substantially parallel to each other in a first direction (x) and a connecting bar connecting the arms and extending in a second direction (y) which is at least substantially perpendicular to the first direction (x). The respective free end of each arm of the U-shaped spring resides in a recess respectively providing support to the spring, and each of the two arms of the U-shaped spring extends across the frame, e.g. across one of the notches, respectively. The recesses and the U-shaped spring are configured such that the two arms are elastically deflected together into the second direction (y) from a starting position into a deflected position when the engagement elements are inserted into the frame, e.g. into the at least two opposing notches.

The interface may also comprise engagement elements of the detachable cartridge which are to be inserted into notches of the frame of the coupling unit. Each engagement element of the detachable cartridge may comprise a post extending in the third direction (z), with each post comprising at least one recess adapted for receiving a portion of one of the arms of the U-shaped spring, wherein the recesses of both posts face into the second direction (y).

The present invention further provides an electric skin treatment device comprising a handle component with a motor, the coupling unit as described above, and a detachable cartridge containing at least one skin treatment unit which is releasably coupled to the handle component by means of the coupling unit.

### BRIEF DESCRIPTION OF THE DRAWINGS

Fig. 1 shows a bottom view of a coupling unit according to a proposed embodiment of the present invention.
Fig. 2 shows a front view of the U-shaped spring in Fig. 1.
Fig. 3 is a schematic sketch of the U-shaped spring of the present invention in its deflected position vs. its non-deflected position.
Fig. 4 shows a bottom view of a coupling unit with the U-shaped spring being deflected by the insertion of the engagement element of the cartridge according to a proposed embodiment of the present invention.
Fig. 5 shows a bottom view of a coupling unit with the U-shaped spring according to another proposed embodiment of the present invention with a different type of recess.
Fig. 6 is a cross-sectional view across the D-D' line in Fig. 4 showing the engagement of the U-shaped spring with an engagement element of a cartridge when the engagement element is inserted into a notch of the frame according to a proposed embodiment of the present invention.
Fig. 7 is a force-travel-ratio chart of the U-spring of the present invention in comparison with that of the known solutions in the state of the art.
Fig. 8 shows an electric skin treatment device in three separate parts according to a proposed embodiment of the present invention.

### DETAILED DESCRIPTION OF THE INVENTION

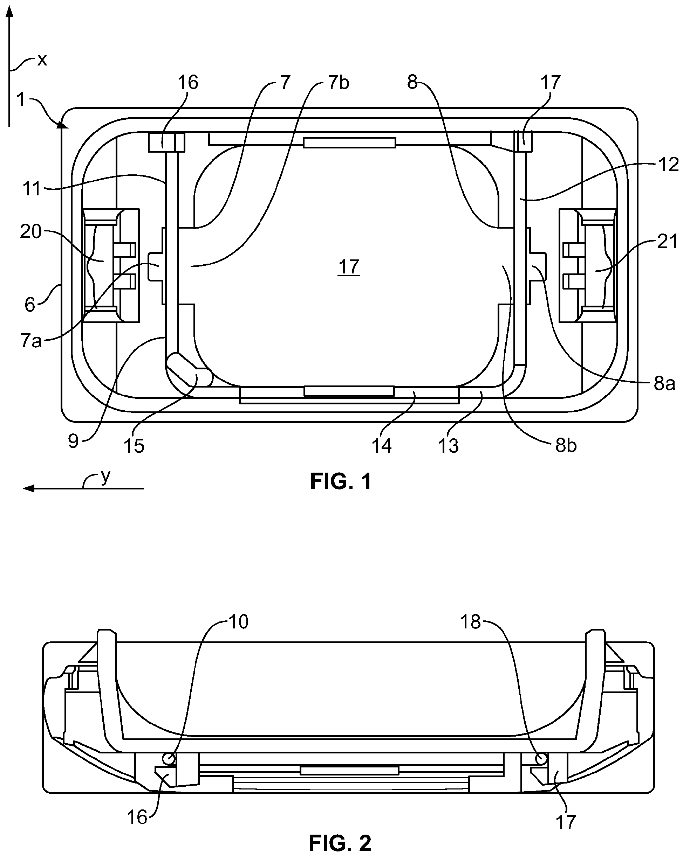

Before describing advantageous embodiments of the invention related to the Fig. 1 to 8, different aspects of the invention are described more in detail. These aspects disclose further features, advantages and possibilities of use of the present invention that might be combined in any useful combination. All features described and/or shown in the drawings are subject matter of the invention, irrespective of the grouping of the features in the claims and/or their back references.

In the below description, the terms "detachable" and "movable" are used synonymously and are interchangeable. The terms "wire" and "spring" are used synonymously and are interchangeable. The terms "main body" and "handle component" are used synonymously and are interchangeable. The term "substantially parallel" means parallel or parallel with a deviation of up to 5 to 10°. The term "substantially perpendicular" means perpendicular or perpendicular with a deviation of up to 5 to 10°.

Hair cutting devices, for example with a foil-type upper cutter and a lower cutter with several blades moving in use relative to the upper cutter, are a typical type of an electric skin treatment device. A removable cartridge of a hair cutting device is for easy cleaning of the hair clippings normally deposited within the cartridge as well as for easy replacement of the cartridge in case of damage or after a certain time of usage. For example, cartridges of shavers should be replaced every 18 months. The present invention is, however, not limited to hair cutting devices but also other electric skin treatment devices including skin cleansing appliances, skin anti-aging treatment devices, skin massage devices as well as the related cartridges of these electric skin treatment devices.

To ensure proper connection between the removable cartridge and the rest of the skin treatment devices, sufficient retention force is required to keep the cartridge connected to the rest part of the skin treatment device. According to the present invention, the retention force is generated via a wire spring shaped like a "U" (U-shaped spring) located within a coupling unit for connecting a detachable cartridge containing at least one skin treatment unit to a handle component of an electric skin treatment device and a corresponding structure of the lower frame of the detachable cartridge.

The coupling unit according to the present invention comprises a frame, wherein the frame comprises at least two opposing notches that are each adapted to receive a respective engagement element of the cartridge. The frame has two sides with a first side facing towards the handle component and an opposite second side facing towards the detachable cartridge. The frame is provided with a U-shaped spring which is located on the first side of the frame, or, alternatively, on the second side of the frame. The U-shaped spring has two arms extending at least substantially parallel to each other in a first direction (x) and a connecting bar connecting the arms and extending in a second direction (y) which is at least substantially perpendicular to the first direction (x). Each of the two arms of the U-shaped spring extends across one of the notches respectively. Two recesses are provided on the first side of the frame and the respective free end of each arm of the U-shaped spring resides in one of the two recesses respectively providing support to the spring, wherein the recesses and the U-shaped spring are conFigured such that the two arms are elastically deflected together into the second direction when the engagement elements are inserted into the at least two opposing notches. In other words, in contrast to known devices where spring arms may be deflected in opposite directions, both arms are deflected in the same direction, namely the second direction.

An important aspect of the present invention is to control the retention force in the assembled position of a detachable cartridge into the main body/handle component of a skin treatment device to not e.g. exceed typical operation forces applied by the consumer which would be perceived as uncomfortable but at the same time to ensure a proper interconnection of the cartridge to the main body/handle component of the skin treatment device. One critical parameter is the spring- ratio of the catch-mechanism. A flat spring-ratio is typically more preferred than a steep spring-ratio. A spring ratio is typically related to the size of the spring, wherein the more flat the spring ratio requires more length of the spring material. However, installation space is very limited in a shaver head due to design- and usability requirements. By applying a U-shaped spring, which increases the spring-length significantly, the present invention delivers the needed retention force with a flat spring ratio. In addition, the U-shaped spring requires very little installation space with the minimal amount of parts, since the shape of the spring is very simple and fits into an area where it barely needs dedicated space but uses only "spare space". Furthermore, the circular surface of the U-shaped spring is used to interact with the counteracting part of the detachable cartridge, and therefore, no additional parts are necessary to provide the interacting surface, which fulfills the design- and usability requirements.

Preferably, the frame comprises at least one snap element on its first side to retain the connecting bar and/or at least one of the arms on the frame in a third direction (z) which is perpendicular to the first direction (x) and perpendicular to the second direction (y). This is important to ensure that the U-shaped spring of the present invention only moves substantially within one plane so that a proper retention force can be generated during assembly of the detachable cartridge onto the handle component of the skin treatment device and an easy attachment and detachment of the cartridge are facilitated. Preferably, the at least one snap element defines at least one groove guiding the connecting bar of the U-shaped spring toward or opposite to the second direction (y).

It is particularly preferred that at least one protrusion is provided at a position of the frame preloading the U-shaped spring in the second direction (y). In addition or as an alternative, at least one protrusion or the above mentioned at least one protrusion may be provided at a position of the frame to prevent movement at least of the connecting bar of the U-shaped spring opposite to the second direction (y) beyond the starting position. This is especially important for when the U-shaped spring is pre-stressed with the assembly of the movable cartridge with the handle component of the skin treatment device, so that the U-shaped spring is only deflected toward the desired direction.

The two recesses on the first side of the frame are provided to accommodate the two free ends of the two arms of the U-shaped spring. In this way, the free ends are prevented from translational movement and thus providing support to the spring. Preferably at least one of the recesses is defined by a first lateral wall extending at least substantially in the first direction (x) and a second lateral wall which is shorter than the first wall and/or inclined to the first wall, wherein the second lateral wall is spaced from the first lateral wall towards the second direction (y), thereby defining a space for receiving the free end of one of the arms. Alternately, at least one of the recesses is defined by a first lateral wall extending at least substantially in the second direction (y) and a second orthogonal wall extending in a third direction (z) perpendicular to the first direction (x) and the second direction (y), wherein the second connects the first lateral wall with the frame and thereby defining a space for receiving the free end of one of the arms.

Preferably, each of the two ends of the U-shaped spring is fixedly anchored in the recess. Alternatively, each of the two ends of the U-shaped spring is pivotably mounted in the recess.

The frame of the present invention typically comprises a central opening with the two notches being open towards the central opening. The two notches are extending on opposite sides of the central opening in opposite directions and are symmetrically located with each other.

In some embodiments, the arms are located asymmetrically with respect to the notches in the starting position or the unstressed condition of the U-shaped spring. This means, for example, one of the arms is extending across the middle part of one of the notches whereas the other arm does not extend across the middle part of the other notch. This facilitates engagement of the cartridge and deflecting the arms in the same direction. Further, the cartridge may be attached in two positions, namely pivoted by 180°, such that the cartridge may be attached irrespective of its orientation.

According to a preferred embodiment of the present invention, the frame is coupled to a support plate by means of at least one swivel joint. The support plate is preferably made of metal and is located on the first side of the frame facing towards the handle component. Usually, the support plate is pivotably coupled to the handle component by means of levers.

The present invention further discloses an electric skin treatment device comprising a handle component with a motor, a coupling unit as described above, and a detachable cartridge containing at least one skin treatment unit which is releasably coupled to the handle component by means of the coupling unit.

The removable cartridges which can be attached to the coupling unit of the present invention contain engagement elements which are to be received within the notches of the frame of the coupling unit. Preferably, each engagement element of the detachable cartridge comprises a post extending in the third direction (z), with each post comprising at least one recess adapted for receiving a portion of one of the arms of the U-shaped spring. Since the recesses are designed to interact with the surface of the spring when the engagement elements are inserted into the notches, therefore the recesses of both posts need to face into the second direction (y), namely the direction of deflection of the U-shaped spring. Preferably, each post comprises two recesses located at opposite sides thereof. With this design, the cartridge may be attached in two orientations with respect to the coupling unit, namely rotated by 180°.

Preferably, each post comprises a tapered surface for deflecting one of the arms of the U-shaped spring into the second direction (y). The tapered surface facilitates insertion of the post into the notch of the frame.

Preferably, the motor of the handle component is connected to at least one drive pin, which extends through the central opening of the frame and is releasably coupled to a driven element of the at least one skin treatment unit. Most preferably, the at least one skin treatment unit is a brush or a hair cutting unit.

With reference to Figure 1, a bottom view of a coupling unit according to a proposed embodiment of the present invention is described. The coupling unit 1 comprises a frame 6. The frame 6 has two sides with a first side facing towards the handle component and an opposite second side facing towards the detachable cartridge. The bottom view in Figure 1 shows the first side of the frame 6.

According to a proposed embodiment of the present invention, the frame 6 comprises two opposing notches 7, 8 that are each adapted to receive a respective engagement element (not shown) of the cartridge as well as a central opening 17. The two notches 7, 8 each assume a form being consisted of a smaller 7a, 8a and a bigger portion 7b, 8b. The two notches 7, 8 are extending on opposite sides of the central opening in opposite directions and are open towards the central opening 17, namely with the smaller portions 7a, 8a extending away from the central opening 17 and the bigger portion 7b, 8b facing toward and being open toward the central opening 17. The two notches 7, 8 are symmetrically located with each other.

The frame 6 is further provided with a U-shaped spring 9 which is located on the first side (bottom side) of the frame 6 and can be seen from the bottom view. The U-shaped spring 9 has two arms 11, 12 extending at least parallel to each other in a first direction (x) and a connecting bar 13 connecting the two arms 11, 12. The connecting bar 13 extends in a second direction (y) which is perpendicular to the first direction (x). A snap element in the form of a groove 14 is provided on the first side to retain the connecting bar 13, so that the connecting bar only moves toward and opposite to the (y) direction. A protrusion 15 is provided at the first side of the frame, wherein the protrusion 15 is positioned within one of the turning corners of the U-shaped spring 9 and the protrusion 15 touches both the connecting bar 13 and its neighboring arm 11. In this way, the connecting bar 13 is prevented from moving opposite to the second direction (y).

Two recesses 16, 17 are provided on the bottom side the frame 6 and the respective free end of each arm 11, 12 of the U-shaped spring resides in one of the two recesses 16, 17 respectively providing support to the spring.

Each of the two arms 11, 12 of the U-shaped spring 9 extends across one of the notches 7, 8 respectively. In the unstressed condition of the U-shaped spring as shown in Fig.1, the arms 11, 12 are located asymmetrically with respect to the notches 7, 8, with the arm 11 being located closer to the small portion 7a of the notch 7 and the arm 12 extending through the middle of the notch 8.

The frame 6 is coupled to a support plate (not shown) through two swivel joints 19, 20.

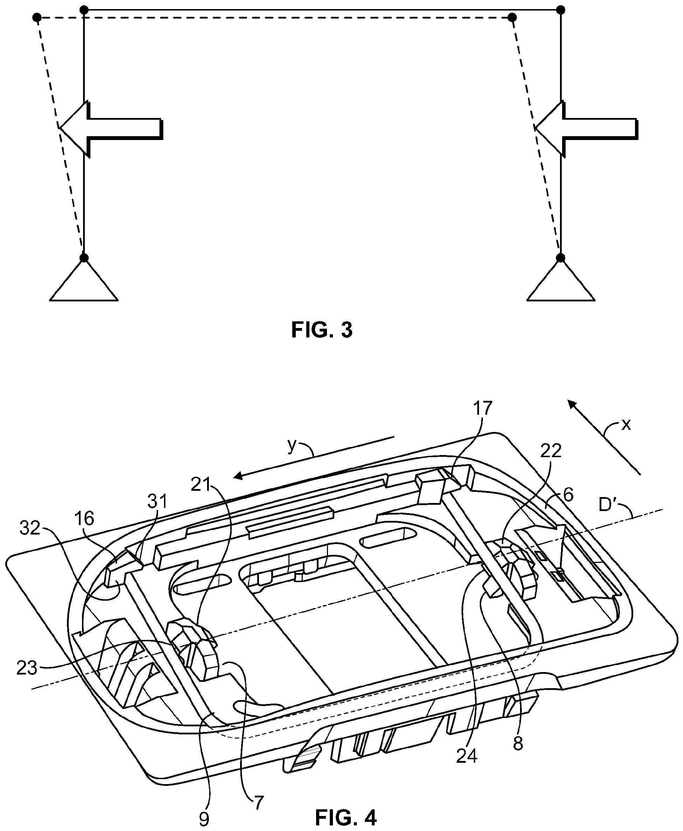

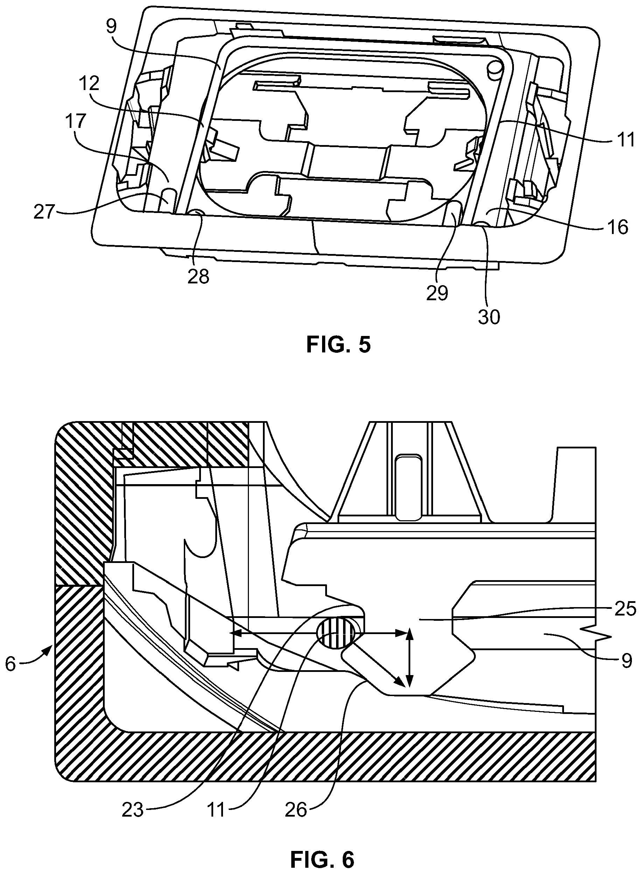

In Figure 2, the U-shaped spring is viewed from the side of its free ends 10, 18. The two free ends 10, 18 of the U-shaped spring are located in the two recesses 16, 17 respectively, and can be fixedly anchored or pivotably mounted in the recesses 16, 17. The structure of the recesses is shown more clearly in Figures 4 and 5.

Figure 3 is a schematic sketch of the U-shaped spring of the present invention in its deflected position vs. its non-deflected position. The two triangles represent a support for two free ends of the U-shaped spring, for example anchored in two recesses providing support to the whole spring. The solid line represents the U-shaped spring in the unstressed, non-deflected position. Under a force (represented by the two arrows) applied by the insertion of the engagement elements of the detachable cartridge into the frame, the U-shaped spring is pre-stressed and deflected. The dashed line shows the deflected U-shaped spring.

Figure 4 shows a bottom view of a coupling unit with the U-shaped spring being deflected by the insertion of the engagement element of the cartridge according to a proposed embodiment of the present invention. Each of the engagement elements 21, 22 comprises a recess 23, 24, and both of the two recesses 23, 24 face into the (y) direction. When the two engagement elements 21, 22 are being inserted into the two notches 7, 8 of the frame 6, they act on the U-shaped spring 9 in the same lateral direction, namely the (y) direction. After the two engagement elements 21, 22 are filled into the two notches 7, 8, each of the two recesses 23, 24 of the two engagement elements 21, 22 receives a portion of the pre-stressed U-shaped spring 9 respectively and interacts with the contacted surface of the U-shaped spring 9 and thus generates the retention force to hold the movable cartridge onto the coupling unit. The dashed line represents the hidden part of the U-shaped spring 9 which actually cannot be seen from the bottom view. In this embodiment, each of the recesses 16, 17 for receiving the free ends of the arms 11, 12 of the U-shaped spring 9 is defined by a first lateral wall 31 extending in the second direction (y) and a second orthogonal wall 32 extending in a third direction (z) perpendicular to the first direction (x) and the second direction (y). The second wall 32 connects the first lateral wall 31 with the first side (bottom side) of the frame and thereby defining a space for receiving the free end 10, 18 of one of the arms 11, 12. Preferably the length of the second wall 32 is exactly as wide as the width of the wire, which facilitates the anchoring of the free end of the arm in the recess.

Figure 5 shows a bottom view of a coupling unit according to another proposed embodiment. In this proposed embodiment, the recesses 16, 17 for receiving the free ends of the arms 11, 12 of the U-shaped spring 9 is each defined by a first lateral wall 27, 29 extending at least substantially in the first direction (x) and a second lateral wall 28, 30 which is shorter than the first wall 27, 29. The second lateral wall 28, 30 is spaced from the first lateral wall 27, 29 towards the second direction (y), thereby defining a space for receiving the free end 10, 18 of one of the arms 11, 12. Preferably, the space between the first lateral wall 27, 29 and the second lateral wall 28, 30 is exactly as wide as the width of the wire.

Figure 6 is a cross-sectional view across the D-D' line in Figure 4 showing the engagement of the U-shaped spring with an engagement element 21 of a cartridge when the engagement element is inserted into a notch of the frame 6 according to a proposed embodiment of the present invention. The engagement element 21 comprises a post 25 extending in a third direction (z) and a recess 23 adapted for receiving a portion of one of the arms 11 of the U-shaped spring 9. The post 25 comprises a tapered surface 26 for deflecting the arm 11 of the U-shaped spring 9 into the second direction (y). In the assembled position, the post 25 of the engagement element and thus the detachable cartridge is fixed into the frame 6 of the coupling unit with a pre-stressing in two directions, namely laterally in the second direction (y) and in the orthogonal third direction (z). The lateral pre-stressing component is to avoid unintended relative movements between the frame of the cartridge and the frame of the coupling unit during shaving which would cause noise, vibration and other undesired effects. The lateral pre-stressing component in the third direction (z) retains the cartridge on the handle.

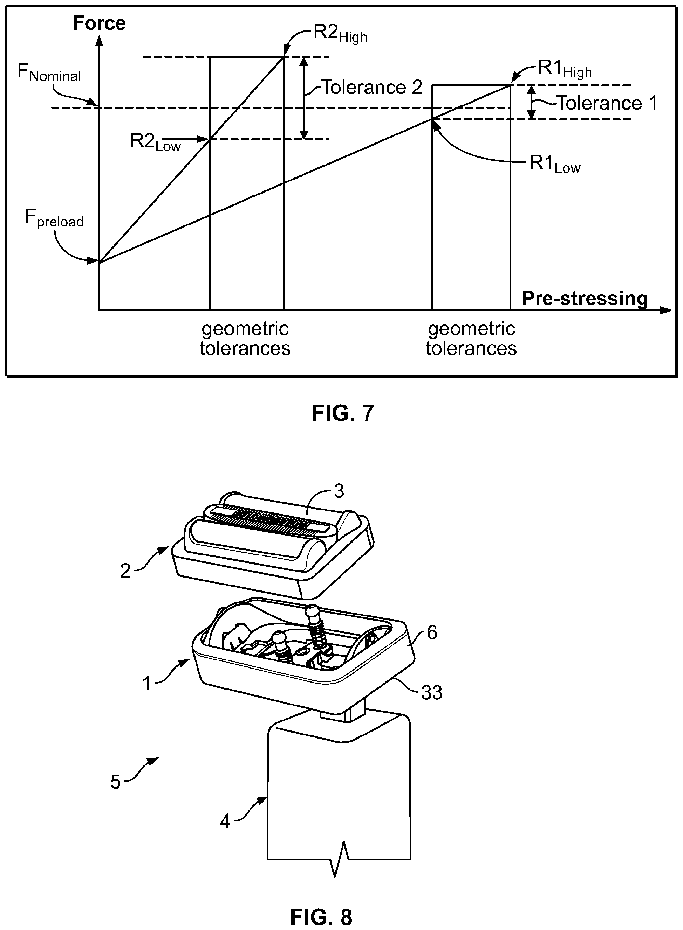

Geometric tolerances of the U-shaped spring 9 and/or the further component parts may have an effect on the spring force exerted by the U-shaped spring 9. Taking into account that the function of the U-shaped spring 9 is to exert a force in a predefined magnitude for attaching the cartridge 2, it is desirable to minimize effects of geometric tolerances on the magnitude of the spring force. Figure 7 is a spring characteristic chart showing the effect of prestressing a spring with a relatively flat spring characteristic compared with a spring having a steeper spring characteristic and is less prestressed. The columns in Figure 7 represent a range of geometric tolerances between a minimum value R_{LOW} and a maximum value R_{HIGH}. The steeper left spring characteristic line causes a larger tolerance in the resulting force based on a prestressing tolerance between the values R2_{LOW} and R2_{HIGH}, i.e. a geometric tolerance changing the prestressing force applied by the U-shaped spring 9. On the other hand, the flater right spring characteristic line causes a smaller tolerance in the resulting force based on the identical prestressing tolerance between the values R1_{LOW} and R1_{HIGH}, i.e. a geometric tolerance changing the prestressing force applied by the U-shaped spring 9. 1.5NBy choosing a spring arrangement as described above with respect to the U-shaped spring 9, the spring ratio can be reduced. This is resulting in a lower force deviation, while having identical geometrical tolerances, even with an identical nominal force value (F_nominal 1 = F_nominal 2; geometric_tolerance 1 = geometric_tolerance 2; Force_Tolerance 1 < Force_Tolerance 2). For example, the preload and the spring characteristic are chosen such that a deflection of the center of the arm 11, 12 of the U-shaped spring 9, i.e. the middle between the free end 10 of the arm and the connecting bar 13, by about 1 mm in the second direction (y) results in an increase in the force exerted by the U-shaped spring 9 at the center of the arm 11, 12 by 5 N to 20 N. The preload may be caused by a deflection of the center of the arm 11, 12 of the U-shaped spring 9 by about 3 mm in the second direction (y) results in a preload force exerted by the U-shaped spring 9 at the center of the arm 11, 12 of 12 N ± 1.5 N. The resulting force exerted by the U-shaped spring 9 at the center of the arm 11, 12 may be 23 N ± 3 N after deflection from the starting position into the deflected position by 1.1 mm.

Figure 8 shows an electric skin treatment device in three separate parts according to a proposed embodiment of the present invention. The electric skin treatment device comprises a handle component 4 with a motor (not shown), a coupling unit 1 with a U-shaped spring and a detachable cartridge 2 containing at least one skin treatment unit 3. The coupling unit 1 comprises a frame 6 and a support plate 33. The skin treatment unit 3 is a hair cutting unit. The detachable cartridge 2 is releasably to be coupled to the handle component 4 by means of the coupling unit 1.

While particular embodiments of the present invention have been illustrated and described, it would be obvious to those skilled in the art that various other changes and modifications can be made without departing from the scope of the appended claims.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm."

### Reference numerals:

- 1: coupling unit
- 2: detachable cartridge
- 3: skin treatment unit
- 4: handle component
- 5: skin treatment device
- 6: frame
- 7: notch
- 8: notch
- 9: U-shaped spring
- 10: free end of the arm of the U-shaped spring
- 11: arm of the U-shaped spring
- 12: arm of the U-shaped spring
- 13: connecting bar
- 14: snap element
- 15: protrusion
- 16: recess
- 17: recess
- 18: free end of the arm of the U-shaped spring
- 19: swivel joint
- 20: swivel joint
- 21: engagement element
- 22: engagement element
- 23: recess
- 24: recess
- 25: post of the engagement element
- 26: tapered surface of the post
- 27: first wall of the recess
- 28: second lateral wall of the recess
- 29: first wall of the recess
- 30: second lateral wall of the recess
- 31: first lateral wall of the recess
- 32: second orthogonal wall of the recess
- 33: support plate

## Claims

1. A coupling unit (1) for connecting a detachable cartridge (2) containing at least one skin treatment unit (3) to a handle component (4) of an electric skin treatment device (5), the coupling unit (1) comprising a frame (6) adapted to receive a respective engagement element (21, 22) of the cartridge (2), and wherein the frame (6) is provided with a U-shaped spring (9) having two arms (11, 12) extending at least substantially parallel to each other in a first direction (x) and a connecting bar (13) connecting the arms (11, 12) and extending in a second direction (y) which is at least substantially perpendicular to the first direction (x), wherein the respective free end (10, 18) of each arm (11, 12) of the U-shaped spring (9) resides in a recess (16, 17) respectively providing support to the spring (9), and each of the two arms (11) of the U-shaped spring (9) extends across the frame (6), respectively, wherein the recesses (16, 17) and the U-shaped spring (9) are configured such that the two arms (11, 12) are elastically deflected together into the second direction (y) from a starting position into a deflected position when the engagement elements (21, 22) are inserted into the frame (6).

2. The coupling unit according to claim 1, wherein the frame (6) comprises at least one snap element (14) retaining the connecting bar (13) and/or at least one of the arms (11, 12) on the frame (6) in a third direction (z) which is perpendicular to the first direction (x) and perpendicular to the second direction (y).

3. The coupling unit according to claim 1 or 2, wherein at least one of the recesses (16, 17) is defined by a first lateral wall (27, 29) extending at least substantially in the first direction (x) and a second lateral wall (28, 30) which is shorter than the first wall (27, 29) and/or inclined to the first wall (27, 29), wherein the second lateral wall (28, 30) is spaced from the first lateral wall (27, 29) towards the second direction (y), thereby defining a space for receiving the free end (10, 18) of one of the arms (11, 12).

4. The coupling unit according to claim 1 or 2, wherein at least one of the recesses (16, 17) is defined by a first lateral wall (31) extending at least substantially in the second direction (y) and a second orthogonal wall (32) extending in a third direction (z) perpendicular to the first direction (x) and the second direction (y), wherein the second orthogonal wall (32) connects the first lateral wall with the frame and thereby defining a space for receiving the free end (10, 18) of one of the arms (11, 12).

5. The coupling unit according to any of the preceding claims, wherein the at least one snap element (14) defines at least one groove (14) guiding the connecting bar (13) of the U-shaped spring (9) in the second direction (y).

6. The coupling unit according to any of the preceding claims, wherein at least one protrusion (15) is provided on the frame (6) at a position preloading the U-shaped spring (9) in the second direction (y) and/or preventing movement at least of the connecting bar (13) of the U-shaped spring (9) opposite to the second direction (y) beyond the starting position.

7. The coupling unit according to any of the preceding claims, wherein each of the two ends (10, 18) of the U-shaped spring (9) is fixedly anchored in the recess (16, 17).

8. The coupling unit according to any of claims 1 to 6, wherein each of the two ends (10, 18) of the U-shaped spring (9) is pivotably mounted in the recess (16, 17).

9. The coupling unit according to any of the preceding claims, wherein the frame (6) comprises a central opening (17) with at least two notches (7, 8) being open towards the central opening (17) and extending on opposite sides of the central opening (17) in opposite directions, wherein the at least two opposing notches (7, 8) of the frame (6) are each adapted to receive the respective engagement element (21, 22) of the cartridge (2).

10. The coupling unit according to claim 9, wherein, in the starting position of the U-shaped spring (9), the arms (11, 12) are located asymmetrically with respect to the notches (7, 8).

11. The coupling unit according to any of the preceding claims, wherein the frame (6) is coupled to a support plate (33) by means of at least one swivel joint (19, 20), wherein the support plate (33) is located on the first side of the frame (6) facing towards the handle component (4) and/or wherein the support plate (33) is pivotably coupled to the handle component (4) by means of levers.

12. An electric skin treatment device (5) comprising a handle component (4) with a motor, a coupling unit (1) according to any of the preceding claims, and a detachable cartridge (2) containing at least one skin treatment unit (3) which is releasably coupled to the handle component (4) by means of the coupling unit (1).

13. The skin treatment device (5) according to claim 12, wherein each engagement element (21, 22) of the detachable cartridge (2) comprises a post (25) extending in the third direction (z), with each post (25) comprising at least one recess (23, 24) adapted for receiving a portion of one of the arms (11, 12) of the U-shaped spring (9), wherein the recesses (23, 24) of both posts (25) face into the second direction (y) and/or wherein each post (25) comprises a tapered surface (26) for deflecting one of the arms (11, 12) of the U-shaped spring (9) into the second direction (y).

14. The skin treatment device (5) according to claim 13, wherein each post (25) comprises two recesses (23, 24) located at opposite sides thereof.

15. The skin treatment device (5) according to any of claims 12 to 14, wherein at least one skin treatment unit (3) is a brush or a hair cutting unit (3).

## Patentansprüche

1. Kuppelungseinheit (1) zum Verbinden einer abnehmbaren Kartusche (2), die mindestens eine Hautbehandlungseinheit (3) enthält, mit einer Griffkomponente (4) einer elektrischen Hautbehandlungsvorrichtung (5), wobei die Kuppelungseinheit (1) einen Rahmen (6) umfasst, konzipiert, um ein jeweiliges Eingriffselement (21, 22) der Kartusche (2) aufzunehmen, und wobei der Rahmen (6) mit einer U-förmigen Feder (9) versehen ist, die zwei Schenkel (11, 12), die sich mindestens im Wesentlichen in einer ersten Richtung (x) parallel zueinander erstrecken, und eine Verbindungsstange (13) aufweist, die die Schenkel (11, 12) verbindet und sich in einer zweiten Richtung (y) erstreckt, die mindestens im Wesentlichen lotrecht zu der ersten Richtung (x) ist, wobei das jeweilige freie Ende (10, 18) jedes Schenkels (11, 12) der U-förmigen Feder (9) sich in einer Aussparung (16, 17) befindet, die jeweils eine Abstützung für die Feder (9) bereitstellt, und jeder der zwei Schenkel (11) der U-förmigen Feder (9) sich jeweils quer über den Rahmen (6) erstreckt, wobei die Aussparungen (16, 17) und die U-förmige Feder (9) derart konfiguriert sind, dass die zwei Schenkel (11, 12) gemeinsam elastisch aus einer Anfangsposition in die zweite Richtung (y), in eine ausgelenkte Stellung, ausgelenkt werden, wenn die Eingriffselemente (21, 22) in den Rahmen (6) eingesetzt werden.

2. Kuppelungseinheit nach Anspruch 1, wobei der Rahmen (6) mindestens ein Schnappverschlusselement (14) umfasst, das die Verbindungsstange (13) und/oder mindestens einen der Schenkel (11, 12) an dem Rahmen (6) in einer dritten Richtung (z) zurückhält, die lotrecht zu der ersten Richtung (x) und lotrecht zu der zweiten Richtung (y) ist.

3. Kuppelungseinheit nach Anspruch 1 oder 2, wobei mindestens eine der Aussparungen (16, 17) durch eine erste Seitenwand (27, 29), die sich mindestens im Wesentlichen in der ersten Richtung (x) erstreckt, und eine zweite Seitenwand (28, 30), die kürzer als die erste Wand (27, 29) ist und/oder zu der ersten Wand (27, 29) geneigt ist, definiert ist, wobei die zweite Seitenwand (28, 30) von der ersten Seitenwand (27, 29) in Richtung der zweiten Richtung (y) beabstandet ist, dadurch einen Raum zum Aufnehmen des freien Endes (10, 18) eines der Schenkel (11, 12) definierend.

4. Kuppelungseinheit nach Anspruch 1 oder 2, wobei mindestens eine der Aussparungen (16, 17) durch eine erste Seitenwand (31), die sich mindestens im Wesentlichen in der zweiten Richtung (y) erstreckt, und eine zweite orthogonale Wand (32), die sich in einer dritten Richtung (z) lotrecht zu der ersten Richtung (x) und der zweiten Richtung (y) erstreckt, definiert ist, wobei die zweite, orthogonale Wand (32) die erste Seitenwand mit dem Rahmen verbindet und dadurch einen Raum zum Aufnehmen des freien Endes (10, 18) eines der Schenkel (11, 12) definiert.

5. Kuppelungseinheit nach einem der vorstehenden Ansprüche, wobei das mindestens eine Schnappverschlusselement (14) mindestens eine Rille (14) definiert, die die Verbindungsstange (13) der U-förmigen Feder (9) in der zweiten Richtung (y) führt.

6. Kuppelungseinheit nach einem der vorstehenden Ansprüche, wobei mindestens ein Vorsprung (15) an dem Rahmen (6) an einer Position bereitgestellt ist, die die U-förmige Feder (9) in der zweiten Richtung (y) vorspannt und/oder die Bewegung von mindestens der Verbindungsstange (13) der U-förmigen Feder (9) entgegengesetzt zur zweiten Richtung (y) über die Anfangsposition hinaus verhindert.

7. Kuppelungseinheit nach einem der vorstehenden Ansprüche, wobei jedes der zwei Enden (10, 18) der U-förmigen Feder (9) in der Aussparung (16, 17) fest verankert ist.

8. Kuppelungseinheit nach einem der Ansprüche 1 bis 6, wobei jedes der zwei Enden (10, 18) der U-förmigen Feder (9) in der Aussparung (16, 17) schwenkbar montiert ist.

9. Kuppelungseinheit nach einem der vorstehenden Ansprüche, wobei der Rahmen (6) eine zentrale Öffnung (17) mit mindestens zwei Einkerbungen (7, 8) umfasst, die in Richtung der zentralen Öffnung (17) offen sind und sich auf gegenüberliegenden Seiten der zentralen Öffnung (17) in entgegengesetzte Richtungen erstrecken, wobei die mindestens zwei gegenüberliegenden Einkerbungen (7, 8) des Rahmens (6) jeweils konzipiert sind, um das jeweilige Eingriffselement (21, 22) der Kartusche (2) aufzunehmen.

10. Kuppelungseinheit nach Anspruch 9, wobei in der Anfangsposition der U-förmigen Feder (9) die Schenkel (11, 12) in Bezug auf die Einkerbungen (7, 8) asymmetrisch angeordnet sind.

11. Kuppelungseinheit nach einem der vorstehenden Ansprüche, wobei der Rahmen (6) mittels mindestens eines Drehgelenks (19, 20) mit einer Trägerplatte (33) gekuppelt ist, wobei die Trägerplatte (33) auf der der Griffkomponente (4) zugewandten ersten Seite des Rahmens (6) angeordnet ist und/oder wobei die Trägerplatte (33) mittels Hebeln schwenkbar mit der Griffkomponente (4) gekoppelt ist.

12. Elektrische Hautbehandlungsvorrichtung (5), umfassend eine Griffkomponente (4) mit einem Motor, eine Kuppelungseinheit (1) nach einem der vorstehenden Ansprüche und eine abnehmbare Kartusche (2), die mindestens eine Hautbehandlungseinheit (3) enthält, die mittels der Kuppelungseinheit (1) lösbar mit der Griffkomponente (4) gekuppelt ist.

13. Hautbehandlungsvorrichtung (5) nach Anspruch 12, wobei jedes Eingriffselement (21, 22) der abnehmbaren Kartusche (2) einen Pfosten (25) umfasst, der sich in der dritten Richtung (z) erstreckt, wobei jeder Pfosten (25) mindestens eine Aussparung (23, 24) umfasst, konzipiert, um einen Abschnitt eines der Schenkel (11, 12) der U-förmigen Feder (9) aufzunehmen, wobei die Aussparungen (23, 24) beider Pfosten (25) in die zweite Richtung (y) weisen und/oder wobei jeder Pfosten (25) eine sich verjüngende Oberfläche (26) zum Auslenken eines der Schenkel (11, 12) der U-förmigen Feder (9) in die zweite Richtung (y) umfasst.

14. Hautbehandlungsvorrichtung (5) nach Anspruch 13, wobei jeder Pfosten (25) zwei Aussparungen (23, 24) umfasst, die auf entgegengesetzten Seiten davon angeordnet sind.

15. Hautbehandlungsvorrichtung (5) nach einem der Ansprüche 12 bis 14, wobei mindestens eine Hautbehandlungseinheit (3) eine Bürste oder eine Haarschneideeinheit (3) ist.

## Revendications

1. Unité de couplage (1) pour raccorder une cartouche détachable (2) contenant au moins une unité de traitement de peau (3) à un composant de manche (4) d'un dispositif électrique de traitement de peau (5), l'unité de couplage (1) comprenant un châssis (6) conçu pour recevoir un élément de mise en prise respectif (21, 22) de la cartouche (2), et dans laquelle le châssis (6) est pourvu d'un ressort en forme de U (9) ayant deux bras (11, 12) s'étendant au moins essentiellement parallèles l'un à l'autre dans une première direction (x) et une barre de raccordement (13) raccordant les bras (11, 12) et s'étendant dans une deuxième direction (y) qui est au moins essentiellement perpendiculaire à la première direction (x), dans laquelle l'extrémité libre respective (10, 18) de chaque bras (11, 12) du ressort en forme de U (9) se trouve dans un évidement (16, 17) fournissant respectivement un support au ressort (9), et chacun des deux bras (11) du ressort en forme de U (9) s'étend à travers le châssis (6), respectivement, dans laquelle les évidements (16, 17) et le ressort en forme de U (9) sont configurés de telle sorte que les deux bras (11, 12) sont élastiquement fléchis ensemble dans la deuxième direction (y) à partir d'une position de départ vers une position fléchie lorsque les éléments de mise en prise (21, 22) sont insérés dans le châssis (6).

2. Unité de couplage selon la revendication 1, dans laquelle le châssis (6) comprend au moins un élément encliquetable (14) retenant la barre de raccordement (13) et/ou au moins l'un des bras (11, 12) sur le châssis (6) dans une troisième direction (z) qui est perpendiculaire à la première direction (x) et perpendiculaire à la deuxième direction (y).

3. Unité de couplage selon la revendication 1 ou 2, dans laquelle au moins l'un des évidements (16, 17) est défini par une première paroi latérale (27, 29) s'étendant au moins essentiellement dans la première direction (x) et une deuxième paroi latérale (28, 30) qui est plus courte que la première paroi (27, 29) et/ou inclinée par rapport à la première paroi (27, 29), dans laquelle la deuxième paroi latérale (28, 30) est espacée de la première paroi latérale (27, 29) vers la deuxième direction (y), ce qui définit un espace pour recevoir l'extrémité libre (10, 18) d'un des bras (11, 12).

4. Unité de couplage selon la revendication 1 ou 2, dans laquelle au moins l'un des évidements (16, 17) est défini par une première paroi latérale (31) s'étendant au moins essentiellement dans la deuxième direction (y) et une deuxième paroi orthogonale (32) s'étendant dans une troisième direction (z) perpendiculaire à la première direction (x) et à la deuxième direction (y), dans laquelle la deuxième paroi orthogonale (32) raccorde la première paroi latérale au châssis et définit de ce fait un espace pour recevoir l'extrémité libre (10, 18) d'un des bras (11, 12).

5. Unité de couplage selon l'une quelconque des revendications précédentes, dans laquelle l'au moins un élément encliquetable (14) définit au moins une rainure (14) guidant la barre de raccordement (13) du ressort en forme de U (9) dans la deuxième direction (y).

6. Unité de couplage selon l'une quelconque des revendications précédentes, dans laquelle au moins une partie saillante (15) est fournie sur le châssis (6) à une position qui précharge le ressort en forme de U (9) dans la deuxième direction (y) et/ou qui empêche un mouvement au moins de la barre de raccordement (13) du ressort en forme de U (9) opposé à la deuxième direction (y) au-delà de la position de départ.

7. Unité de couplage selon l'une quelconque des revendications précédentes, dans laquelle chacune des deux extrémités (10, 18) du ressort en forme de U (9) est ancrée fixement dans l'évidement (16, 17).

8. Unité de couplage selon l'une quelconque des revendications 1 à 6, dans laquelle chacune des deux extrémités (10, 18) du ressort en forme de U (9) est montée à pivotement dans l'évidement (16, 17).

9. Unité de couplage selon l'une quelconque des revendications précédentes, dans laquelle le châssis (6) comprend une ouverture centrale (17) avec au moins deux encoches (7, 8) étant ouvertes en direction de l'ouverture centrale (17) et s'étendant sur des côtés opposés de l'ouverture centrale (17) dans des directions opposées, dans laquelle les au moins deux encoches opposées (7, 8) du châssis (6) sont chacune conçues pour recevoir l'élément de mise en prise respectif (21, 22) de la cartouche (2).

10. Unité de couplage selon la revendication 9, dans laquelle, dans la position de départ du ressort en forme de U (9), les bras (11, 12) sont situés asymétriquement par rapport aux encoches (7, 8).

11. Unité de couplage selon l'une quelconque des revendications précédentes, dans laquelle le châssis (6) est couplé à une plaque de support (33) au moyen d'au moins un joint oscillant (19, 20), dans laquelle la plaque de support (33) se situe sur le premier côté du châssis (6) faisant face au composant de manche (4) et/ou dans laquelle la plaque de support (33) est couplée de façon pivotante au composant de manche (4) au moyen de leviers.

12. Dispositif électrique de traitement de peau (5) comprenant un composant de manche (4) avec un moteur, une unité de couplage (1) selon l'une quelconque des revendications précédentes, et une cartouche détachable (2) contenant au moins une unité de traitement de peau (3) qui est couplée de manière libérable au composant de manche (4) au moyen de l'unité de couplage (1).

13. Dispositif de traitement de peau (5) selon la revendication 12, dans lequel chaque élément de mise en prise (21, 22) de la cartouche détachable (2) comprend un tenon (25) s'étendant dans la troisième direction (z), chaque tenon (25) comprenant au moins un évidement (23, 24) conçu pour recevoir une partie d'un des bras (11, 12) du ressort en forme de U (9), dans lequel les évidements (23, 24) de l'un et l'autre des tenons (25) font face dans la deuxième direction (y) et/ou dans lequel chaque tenon (25) comprend une surface effilée (26) pour fléchir l'un des bras (11, 12) du ressort en forme de U (9) dans la deuxième direction (y).

14. Dispositif de traitement de peau (5) selon la revendication 13, dans lequel chaque tenon (25) comprend deux évidements (23, 24) situés au niveau de côtés opposés de celui-ci.

15. Dispositif de traitement de peau (5) selon l'une quelconque des revendications 12 à 14, dans lequel au moins une unité de traitement de peau (3) est une brosse ou une unité de coupe de poils (3).
